# EUROPEAN PATENT SPECIFICATION

(11) **EP 0 905 337 B1**
(45) Date of publication and mention of the grant of the patent: **09.02.2005**
(21) Application number: 98118134.0
(22) Date of filing: 24.09.1998
(51) Int. Cl.: E05B 49/00, B60R 25/04

(54) **Starting switch for a vehicle and the system thereof**
Anlassschalter für ein Fahrzeug und dazugehöriges System
Interrupteur de démarrage pour un véhicule et système associé

(30) Priority: 25.09.1997 JP 26035297
(43) Date of publication of application: 31.03.1999
(73) Proprietor: TOYOTA JIDOSHA KABUSHIKI KAISHA, Toyota-shi, Aichi-ken 471-8571 (JP)
(72) Inventor: Yamamoto, Keiji c/o Toyota Jidosha K. K., Toyota-shi, Aichi-ken 471-8571 (JP); Sakai, Kazunori c/o Toyota Jidosha K. K., Toyota-shi, Aichi-ken 471-8571 (JP)
(74) Representative: Pellmann, Hans-Bernd, Dipl.-Ing.

(56) References cited:
- WO-A-90/08242
- DE-A- 4 409 559
- FR-A- 2 569 641

## Description

The present invention relates to a starting system for a vehicle and more specifically to a starting system for exchanging code through communication in order to control toggling of various kinds of switches between on and off as well as actuating the power, and more particularly to a starting system for a vehicle having a mechanical switch section that can be operated by a knob-style key.

Operations to unlock a door and to actuate driving system such as an engine have conventionally been made by a series of mechanical actions of inserting a key into a key cylinder and turning it. On the other hand, various types of keyless entry system using a potable electronic key have been suggested and systems releasing a door lock through wireless communication between an electronic key and a vehicle are becoming common. In a common keyless entry system, a unique code (ID code) transmitted from a portable electronic key is verified at a vehicle side, and the door lock or the like is released only when the validity of the code is confirmed. That is, the operations such as to lock/unlock a door are exclusively done by a use of the valid electronic key.

In addition, it has been suggested that the operation of an ignition switch may be executed using an electronic key. For example, in Japanese Patent Laid-Open Publication No. Hei 3-191186 a key which can be inserted into the key cylinder of an ignition switch and imparted with communication facility of code is suggested. With such a key, a lock/unlock facility based on an exchange of code through communications can be imparted while the key keeps the same capability as an ordinary key.

On the other hand, smart entry system that automatically unlock a door when a key approaches a vehicle with a key and automatically lock a door when a key leaves a vehicle has been suggested.

Developing the smart entry system, it becomes possible to release the locks of an immobilizer and an ignition switch by sitting in a driver's seat while possessing an appropriate key. As a result of this, a driver can start an engine and so on through manual operation of the ignition switch.

However, a switch that is conventionally operated by insertion of a key is commonly adopted as an ignition key and the desire to maintain such a conventional operation is strong. To satisfy the request, however, the shape of a key is restricted and operations of taking out a key and inserting it into a key cylinder should be required.

Thus, when a lock-release function of an ignition switch is imparted to the smart entry system, usage patterns thereof seem to vary according to personal preferences.

As a consequence of constructing respective switch systems to suit the personal preferences, it is necessary to prepare two types of operational portions of the ignition key, one with and one without the key insertion step. This, however, causes a problem of increased manufacturing cost because of altering components of a vehicle according to the needs of the user in conjunction with increases of designing cost because of designing those parts respectively.

### SUMMARY OF THE INVENTION

It is an object of the present invention to provide a starting system for a vehicle that can respond to electronic keys formed in a variety of shapes.

According to the present invention, this object is achieved by a starting system for a vehicle as defined in claim 1.

Advantageous further developments are stated in the dependent claims.

The present invention relates to a starting system for a vehicle that performs code verification against an electronic key through communications and controls toggling of various kinds of switches between on and off as well as actuating the power. As a knob-style key can be inserted into a mechanical switch part, the operation of a mechanical switch can be performed by the knob-style key. Communications with an electronic key carried by a user (usually a driver) in a cabin of a vehicle is executed in order to control an immobilizer that is an actuation control section of the power (engine). Then, the user can insert a separate knob-style key into a mechanical switch section to perform starting operations while the user still carrys the electronic key on their person.

As the knob-style key is formed as a separate body from the electronic key as mentioned above, it is possible to form the electronic key itself in the shape of a card or the like without restraint. In addition, the starting operation can be carried out by the insertion of the knob-style key in the same manner as a conventional mechanical key. Furthermore, the knob-style key is allowed to remain inserted in the mechanical switch because code verification cannot be performed unless the electronic key is taken along and this prohibits the actuation of the power. Accordingly, the shape of the electronic key never affects the construction of a vehicle so that any changes of vehicle side are not necessary.

Further, with this invention, it is preferable that starting operation of an engine can be executed even when the knob-style key is formed integrally with the electronic key. This enables to form the electronic key itself in the shape of knob style in accordance with the needs of the user. These starting operation can be done by inserting the knob-style electronic key into a receptacle, is the case with a conventional key. This structure allows operational portion on a vehicle side to be consistent regardless of whether the electronic key is used with or without a knob portion. Thus only a single configulation is required for the operational portion. As a consequence, while constructing electronic key system attuned to user preferences, an increase of designing and manufacturing cost is effectively prevented.

Furthermore, in the present invention, it is preferable that the aforementioned starting switch for a vehicle be an ignition switch. The operation of the ignition switch that is conventionally made by a mechanical key may be done by either a knob-style key or a knob-style electronic key. In addition, the actuation of the power can be positively protected against illegal operations since an authorization of the actuation is checked through the communication with the electronic key.

### BRIEF DESCRIPTION OF THE DRAWINGS

Fig. 1 is a block diagram illustrating a general configuration of an electronic key system using a starting switch for a vehicle depicted in an embodiment;
Fig. 2 is a block diagram illustrating a circuit construction of an electronic key;
Fig. 3 shows constructions of an ignition switch and a knob-style key;
Fig. 4 is a flow chart outlining driver actions while driving a vehicle.

### DESCRIPTION OF PREFERRED EMBODIMENT

The following is a description of the preferred embodiment of the present invention based on the accompanying drawings.

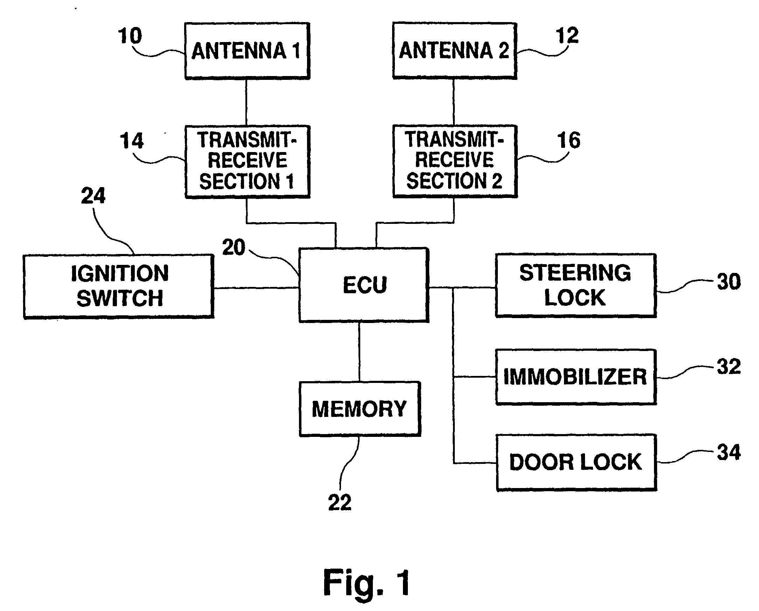

A configuration of an electronic key system using a starting switch for a vehicle of this embodiment is found in Fig. 1. This system contains two antennas of a first antenna 10 and a second antenna 12. The first antenna 10 may be attached, for example, to a door handle. On the other hand, the second antenna 12 may be equipped in the vicinity of an instrument panel within a cabin of a vehicle. The first antenna 10 is connected to an ECU 20 via a first transmit-receive section 14 and the second antenna 12 is connected to that via a second transmit-receive section 16. The ECU 20 performs transmission and reception with an electronic key through the first antenna 10 and the second antenna 12. As an actual circuit, the first and the second transmit-receive section 14, 16 may be integrated into a single circuit.

The ECU 20 is connected to a memory 22 in which one or more ID codes (hereafter referred to as code) are stored. More specifically, the code is differentiated between door-lock code for locking doors and engine-start code for starting an engine. Moreover, the memory 22 may preferably be an EEPROM or the like so that memory contents will not be lost when power is switched off.

An ignition switch (mechanical switch section) 24 is a mechanical switch just as a usual ignition switch and its operation controls to actuate accessories, an ignition, and a starter.

In addition, a steering lock 30, an immobilizer 32, and a door lock 34 are connected to the ECU 20. The steering lock 30 mechanically disables the operation of a steering, the immobilizer 32 disables fuel feeding into the engine and actions of the ignition, and the door lock 34 controls door locking or unlocking.

The construction of an electronic key is as follows:

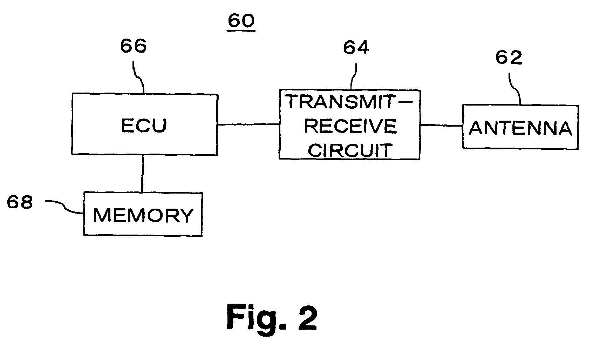

Fig. 2 shows a circuit construction of an electronic key 60. As illustrated, an antenna 62, performing transmission/reception with outside, is connected to an ECU 66 through a transmit-receive circuit 64. A memory 68 in which code is stored is connected to the ECU 66. The ECU 66 reads code from the memory 68 according to the signal received from the antenna 62 and transmits the code from the antenna 62. In addition, the memory 68 comprises an EEPROM or the like and stores a plurality of code. Furthermore, the electronic key 60 usually incorporates a battery and functions through the use of the power thereof.

The construction of an electronic key and an ignition switch is as follows:

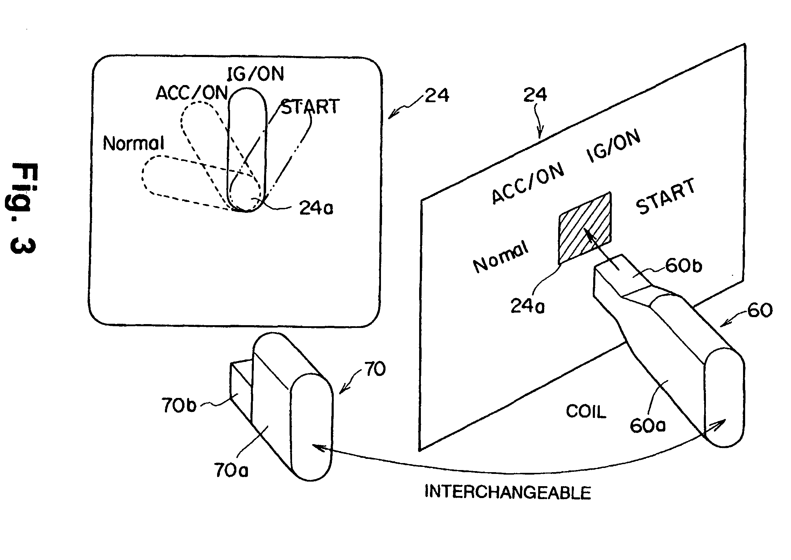

Referring now to Fig. 3, above-stated ignition switch 24 is provided with a key cylinder 24a as shown, and can be operated by a knob-style key 70, which is inserted into the key cylinder 24a. The knob-style key 70 may be a knob-style electronic key 60 of that the facility of key operation is added to an electronic key itself or merely be the knob-style key 70.

That is, the knob-style electronic key 60 shown in Fig. 3 incorporates the circuit shown in Fig. 2 in addition to including a gripping portion 60a and an operational slip-in portion 60b where it is inserted into the key cylinder 24a. On the other hand, the knob-style key 70 is only provided with a gripping portion 70a and an operational slip-in portion 70b where it is inserted into the key cylinder 24a, and does not include circuit component. Therefore, the electronic key 60 formed as a separate body from the knob-style key 70. In this case, the electronic key 60 is preferably formed in the shape of a card.

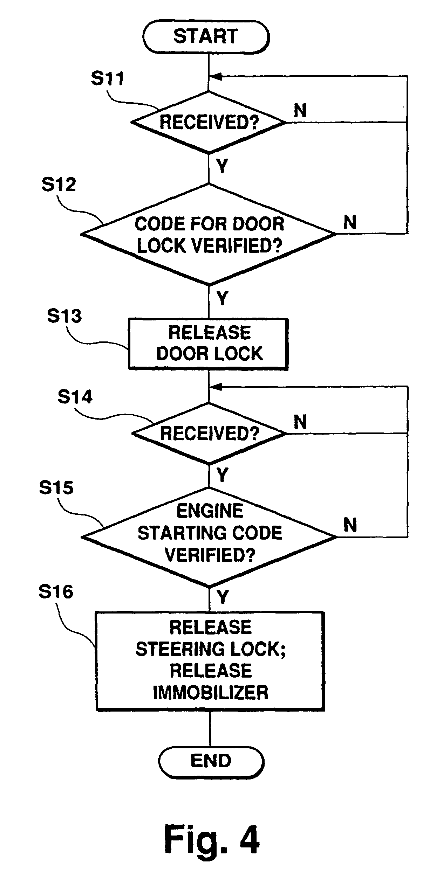

Operation to begin operating a vehicle are as follows and are explained with reference to the flow described in Fig. 4:

When a vehicle is parked with all its doors locked, the ECU 20 sends a request in the form of radio waves in a fixed frequency (for example, 300MHz) at regular intervals (for example, every 200 msec) from the first antenna 10, and then decides whether a response is returned from the electronic key 60 (S11).

When an operator possessing the electronic key 60 approaches the vehicle (for example, the key is in the operator's pocket), an antenna 62 equipped on the electronic key 60 receives the request of radio waves from the antenna 10. The electronic key 60, then, reads and transmits a corresponding door-lock code from a memory 68. The ECU 20 on the vehicle side receives radio waves lying within a predetermined wavelength sent from the electronic key 60 and verifies the code of received radio waves against the door-lock code stored in the memory 22 (S12) when the decision of S11 is YES. When the verification result about S12 is YES, the ECU 20 recognizes that the valid electronic key 60 is approaching the vehicle and controls a door lock 34 in order to unlock all the vehicle doors.

The ECU 20 then sends a request through the second antenna 12 and decides whether a response from the electronic key is received (S14). It is also preferable to begin sending a request through the second antenna 12 after the detection that the doors have actually been opened. When the user is in the vehicle, the antenna 62 of the electronic key 60 receives the radio waves sent from the second antenna 12. Responding to the request of radio waves 2 sent from the second antenna 12, the ECU 66 of the electronic key 60 reads engine-start code from the memory 68 and transmits this through the antenna 62.

When the ECU 20 of the vehicle side receives the radio waves from the electronic key 60, it verifies the code transmitted by the radio waves against the engine-start code stored in the memory 22 (S15). When it is confirmed that the engine-star code has been transmitted, the ECU 20 controls an ignition switch 24, steering lock 30, and immobilizer 32 in order to release the protection for starting the engine by the immobilizer 32 in addition to releasing a lock for the ignition switch 24 and the steering lock 30 (S16). A driver, consequently, can operate the ignition switch 24 to start the engine.

At this point, a driver carrying the knob-style electronic key 60 inserts an operational slip-in portion 60b of the electronic key 60 into a key cylinder 24a provided to the ignition switch 24 to operate the vehicle, while a driver carrying the card-style electronic key 60 operates the ignition switch 24 using the knob-style key 70.

As the knob-style key 70 is only needed to provide a mechanical rotation, it can be a common part for various kinds of vehicles. This allows the cost of the knob-style key itself to be very cheap and presents no security problem because the operation of the ignition switch 24 is authorized only when the electronic key 60 is carried and the code verification is performed thereby. In addition, this allows forming the electronic key 60 in an arbitrary shape of various styles such as a card style, key-holder style, or key style. That is, a variety of electronic keys 60 responding to user's preferences are available.

Still further, once the key-style electronic key 60 or the knob-style key 70 is inserted into the key cylinder 24a of the ignition switch 24, the gearshift lever of AT (automatic transmission) automobile is interlocked so that withdrawal of the electronic key 60 or the knob-style key 70 from the ignition switch 24 is prohibited except when the gearshift lever is shifted at parking position during parking. In the case of a MT (manual transmission) automobile, the withdrawal is also prohibited during driving. The withdrawal, however, is permitted when the gearshift lever is shifted at parking position during parking even thought the ignition remains on position. As a consequence, it becomes possible to insert or withdraw the key while the engine is in action. For this case, operations of stopping the engine and so on will be executed if the ignition switch 24 is not reinserted within a fixed time period.

As mentioned above, operations can be made whenever the knob-style key 70 is in the ignition switch 24, regardless of whether the electronic key 60 is taken along in this embodiment. Moreover, the knob-style key 70 can be formed in a shape so as to be applied to various kinds of vehicles. Consequently, if the knob-style key 70 is lost, it is possible to actuate the engine using another knob-style key 70, as long as the electronic key 60 is available. As it is not necessary to take out the electronic key 60 for driving, the chances of its loss are greatly reduced.

On the other hand, if only the knob-style key 70 is carried, it is impossible to actuate the engine because the code verification and the release of each kind of locks are not performed unless the electronic key 60 is taken along. For this reason, keeping the knob-style key 70 in the ignition switch 24 or in a glove compartment, does not adversely affect vehicle security.

In addition, when a driver carrying the electronic key 60 briefly exits the vehicle, so as to take turns at driving, for example, it is preferable that the engine be allowed to maintain operation (temporary duration of engine operation) as long as the knob-style key 70 is in the ignition switch 24. This could also, for example, enable the owner to carry the important electronic key 60 when leaving the car with a parking attendant. When the knob-style electronic key 60 is inserted into the ignition switch 24, it is preferably interchangeable with the knob-style key 70 under operation conditions of the engine (for example, the condition is restricted at parking). This makes it possible to deal speedily with key swapping.

Additionally, as the knob-style key 70 is inserted into the ignition switch 24 for the operation even when the card-style electronic key 60 is used, it is possible to impart the capability just as in the case of the key interlock provided by a conventional mechanical key.

As described above, according to this embodiment it is not necessary to alter the ignition switch 24 regardless of whether the electronic key 60 or the knob-style key 70 is used. This enables a vehicle to respond to user preferences without requiring modification to the construction of a vehicle side. It is then possible to reduce component count, designing cost, and manufacturing cost as a whole.

An ignition switch 24 is provided with a key cylinder 24a, into which either a knob-style key 70 or a knob-style electronic key 60 can be inserted. When the knob-style key 70 is used, communication is executed with a separate electronic key 60 carried by a driver and actuation of an engine is permitted when it is verified that the proper electronic key 60 is carried. When the knob-style electronic key 60 is used, both communication and operation are executed by using the knob-style electronic key 60. In this way a vehicle starting switch can respond to electronic keys formed in various shapes.

## Claims

1. A starting system for a vehicle, comprising
a plurality of keys and a switch on a vehicle side, wherein that plurality of keys comprises,
a portable knob-style key having a mechanical function but no electronic function, and
a portable electronic key having no mechanical function but an electronic function for transmitting a code, wherein
said portable knob-style key and said portable electronic key are formed as separate parts, and
wherein said switch on the vehicle side comprises,
a mechanical switch section into which said knob-style key can be inserted and in which operation by the inserted knob-style key is possible,
a communication section for communicating with said electronic key when it is present in the vehicle's cabin,
a verification section for verifying code, transmitted from said electronic key and received at said communication section, against stored code, and
an engine-starting control section for controlling to actuate an engine according to the verification result obtained by said verification section, wherein
a starting operation of the vehicle can be performed when said electronic key is present by inserting said separate knob-style key into said mechanical switch section.

2. A starting system according to claim 1, wherein said knob-style key comprises
an operational slip-in portion that can be inserted into said mechanical switch portion, and
a gripping portion that can be gripped by a user.

3. A starting system according to claim 1 or 2, wherein said electronic key is formed as an integral part of said knob-style key, and provided with an operational slip-in portion and a gripping portion.

4. A starting system according to claim 1 or 2, wherein said electronic key is formed in a card shape.

5. A starting system according to any one of claims 1 to 3, wherein said electronic key is a knob-type electronic key having electronic and mechanical function.

6. A starting system according to any one of claims 1 to 5, wherein said starting switch for a vehicle is an ignition switch.

## Patentansprüche

1. Anlasssystem für ein Fahrzeug, mit
einer Vielzahl von Schlüsseln und einem Schalter auf einer Fahrzeugseite, wobei die Vielzahl von Schlüsseln umfasst,
einen tragbaren knopfförmigen Schlüssel mit einer mechanischen Funktion jedoch keiner elektronischen Funktion, und
einen tragbaren elektronischen Schlüssel ohne mechanische Funktion jedoch mit einer elektronischen Funktion zur Sendung eines Codes, wobei
der tragbare knopfförmige Schlüssel und der tragbare elektronische Schlüssel als separate Teile ausgebildet sind, und
wobei der Schalter auf der Fahrzeugseite umfasst,
einen mechanischen Schalterabschnitt, in welchen der knopfförmige Schlüssel eingebracht werden kann, und in welchem eine Operation durch den eingebrachten knopfförmigen Schlüssel möglich ist,
einen Kommunikationsabschnitt zur Kommunikation mit dem elektronischen Schlüssel, wenn er in der Fahrzeugkabine vorhanden ist,
einen Verifizierabschnitt zum Verifizieren von Code, der von dem elektronischen Schlüssel gesendet wurde und bei dem Kommunikationsabschnitt empfangen wurde, gegenüber gespeichertem Code, und
einen Maschinenanlass-Steuerabschnitt zur Steuerung eines in Betrieb Setzens einer Maschine gemäß dem von dem Verifizierabschnitt erlangten Verifizierergebnis, wobei
eine Anlassoperation des Fahrzeugs bei vorhandenem elektronischen Schlüssel durchgeführt werden kann, indem der separate knopfförmige Schlüssel in den mechanischen Schalterabschnitt eingebracht ist.

2. Anlasssystem nach Anspruch 1, wobei der knopfförmige Schlüssel umfasst,
einen Operationssteckabschnitt, der in den mechanischen Schalterabschnitt eingesteckt werden kann, und
einen Griffabschnitt, der von einem Benutzer gegriffen werden kann.

3. Anlasssystem nach Anspruch 1 oder 2, wobei der elektronische Schlüssel als ein integraler Teil des knopfförmigen Schlüssels gebildet ist, und mit einem Operationssteckabschnitt und einem Griffabschnitt ausgestattet ist.

4. Anlasssystem nach Anspruch 1 oder 2, wobei der elektronische Schlüssel in Kartenform ausgebildet ist.

5. Anlasssystem nach einem der Ansprüche 1 bis 3, wobei der elektronische Schlüssel ein knopfförmiger elektronischer Schlüssel mit einer elektronischen und mechanischen Funktion ist.

6. Anlasssystem nach einem der Ansprüche 1 bis 5, wobei der Anlassschalter für ein Fahrzeug ein Zündschalter ist.

## Revendications

1. Système de démarrage destiné à un véhicule, comprenant
une pluralité de clés et un commutateur du côté véhicule, dans lequel la pluralité de clés comprend,
une clé de type poignée portable ayant une fonction mécanique mais non pas une fonction électronique, et
une clé électronique portable n'ayant pas de fonction mécanique mais une fonction électronique destinée à transmettre un code, où
ladite clé de type poignée portable et ladite clé électronique portable sont formées en tant que pièces séparées, et
où ledit commutateur du côté véhicule comprend,
une section de commutateur mécanique dans laquelle ladite clé de type poignée peut être insérée et dans laquelle une action est possible grâce à la clé de type poignée insérée,
une section de communication destinée à communiquer avec ladite clé électronique lorsqu'elle est présente dans l'habitacle du véhicule,
une section de vérification destinée à vérifier un code, transmis depuis ladite clé électronique et reçu à ladite section de communication, vis-à-vis d'un code mémorisé, et
une section de commande de démarrage de moteur destinée à commander l'activation d'un moteur conformément au résultat de la vérification obtenu par ladite section de vérification, où
une opération de démarrage du véhicule peut être exécutée lorsque ladite clé électronique est présente en insérant ladite clé de type poignée séparée dans ladite section de commutateur mécanique.

2. Système de démarrage selon la revendication 1, dans lequel ladite clé de type poignée comprend
une partie fonctionnelle à introduire qui peut être insérée dans ladite partie de commutateur mécanique, et
une partie de prise qui peut être tenue par un utilisateur.

3. Système de démarrage selon la revendication 1 ou 2, dans lequel ladite clé électronique est formée en tant que pièce solidaire de ladite clé de type poignée, et est munie d'une partie fonctionnelle à introduire et d'une partie de prise.

4. Système de démarrage selon la revendication 1 ou 2, dans lequel ladite clé électronique prend une forme de carte.

5. Système de démarrage selon l'une quelconque des revendications 1 à 3, dans lequel ladite clé électronique est une clé électronique de type poignée ayant une fonction électronique et mécanique.

6. Système de démarrage selon l'une quelconque des revendications 1 à 5, dans lequel ledit commutateur de démarrage destiné à un véhicule est un commutateur de contact.
